(19) Europäisches Patentamt / European Patent Office / Office européen des brevets

(11) **EP 1 677 070 B1**

(12) **EUROPÄISCHE PATENTSCHRIFT**

(45) Veröffentlichungstag und Bekanntmachung des Hinweises auf die Patenterteilung:
**14.03.2007 Patentblatt 2007/11**

(51) Int Cl.:
***G01B 11/245*** (2006.01)

(21) Anmeldenummer: **05028122.9**

(22) Anmeldetag: **22.12.2005**

(54) **Verfahren und Vorrichtung zum Bestimmen der Durchbiegung eines Verbindungselements**

Method and device for determining the deflection of a connecting element

Procédé et dispositif destinés à la détermination de la flexion d'un élément de liaison

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.01.2005 DE 102005000610**

(43) Veröffentlichungstag der Anmeldung:
**05.07.2006 Patentblatt 2006/27**

(73) Patentinhaber: **Kamax-Werke Rudolf Kellermann GmbH & Co. KG 37520 Osterode am Harz (DE)**

(72) Erfinder:
• **Hartmann, Gunther, Dr. 36304 Alsfeld (DE)**
• **Deeg, Wolfgang 35315 Homberg/Ohm (DE)**

(74) Vertreter: **Rehberg Hüppe + Partner Nikolausberger Weg 62 37073 Göttingen (DE)**

(56) Entgegenhaltungen:
**DE-A1- 2 945 456        DE-U1- 29 503 708**

• **PATENT ABSTRACTS OF JAPAN Bd. 1996, Nr. 10, 31. Oktober 1996 (1996-10-31) -& JP 08 159732 A (TAIYO YUDEN CO LTD), 21. Juni 1996 (1996-06-21)**
• **PATENT ABSTRACTS OF JAPAN Bd. 010, Nr. 284 (P-501), 26. September 1986 (1986-09-26) & JP 61 105409 A (MATSUSHITA ELECTRIC IND CO LTD; others: 01), 23. Mai 1986 (1986-05-23)**
• **LU R S ET AL: "On-line measurement of the straightness of seamless steel pipes using machine vision technique" 31. Oktober 2001 (2001-10-31), SENSORS AND ACTUATORS A, ELSEVIER SEQUOIA S.A., LAUSANNE, CH, PAGE(S) 95-101 , XP004318405 ISSN: 0924-4247 * Seite 96, linke Spalte, Zeile 34 - Seite 97, linke Spalte, Zeile 9; Abbildung 1 ***

EP 1 677 070 B1

**Beschreibung**

Die Erfindung betrifft ein Verfahren und eine Vorrichtung zum Bestimmen der Durchbiegung eines Verbindungselements. Bei lang gestreckten Bauteilen kommt es fertigungsbedingt häufig vor, dass diese eine unzulässige Abkrümmung bzw. Durchbiegung aufweisen. Ursache hierfür ist hauptsächlich eine Wärmebehandlung der insbesondere als Verbindungselement ausgeführten Bauteile, bei denen diese auf hohe Temperaturen erhitzt werden. Dadurch sinkt die Festigkeit des Werkstoffs des Verbindungselements stark ab. Durch das Eigengewicht in Verbindung mit dem Transport des Verbindungselements durch in der Regel als Banddurchlaufanlagen ausgeführte Öfen kommt es zu diesen Abkrümmungen bzw. Durchbiegungen. Die aus Durchsatzgründen erforderliche mehrlagige Schichtung der Verbindungselemente in dem Ofen verstärkt diesen unerwünschten Effekt. Aufgrund der Durchbiegungen kann es zu Schwierigkeiten bei der Montage der Verbindungselemente kommen.

**STAND DER TECHNIK**

Eine Vorrichtung zum Bestimmen der Durchbiegung eines lang gestreckten Bauteils ist aus der *deutschen Patentanmeldung DE 38 25 415 A1* bekannt. Bei dem lang gestreckten Bauteil handelt es sich vorzugsweise um einen an seinen beiden axialen Enden abgestützten Balken, wie beispielsweise einen Balken in einer Papier-Streicheinrichtung oder dem Stoffauflauf einer Papiermaschine. Die Vorrichtung weist eine Sendereinheit für elektromagnetische Strahlung oder Licht auf, die in der Mitte des Balkens an diesem befestigt ist. Im Bereich der beiden axialen Enden des Balkens sind Empfängereinheiten für die elektromagnetische Strahlung bzw. das Licht angeordnet. Die Empfängereinheiten weisen Sensorflächen auf, die zur Detektierung der Neigung der von der Sendereinheit ausgestrahlten Strahlung dienen. Anhand dieser Neigung wird die Durchbiegung des Balkens bestimmt. Die bekannte Vorrichtung erfordert die feste Verbindung der Sendereinheit sowie der Empfangseinheiten mit dem Balken. Sie eignet sich somit nicht für die Anwendung in Bezug auf in einem Materialfluss zu untersuchende Bauteile.

Eine Vorrichtung zur Bestimmung der Durchbiegung eines Zylinders einer Rotationsdruckmaschine ist aus der *europäischen Patentschrift EP 0 706 886 B1* bekannt. An dem Zylinder der Rotationsdruckmaschine ist ein Biegestab befestigt. Während der Durchbiegung des Zylinders wird der Biegestab mit einer Biegekraft und einem Biegemoment beaufschlagt, wodurch es zu einer Durchbiegung des Biegestabs kommt. Die Durchbiegung wird von Dehnungsmessstreifen aufgenommen und über eine Elektronik ermittelt. Die ermittelten Werte werden als Maß für die auf den Zylinder wirkenden Kräfte genutzt. Die Vorrichtung eignet sich nicht für die Anwendung in Bezug auf in einem Materialfluss zu untersuchende Bauteile.

Verfahren und Vorrichtungen zur berührungslosen Bestimmung von Durchbiegungen bzw. Verformungen von langgestreckten Körpern aufgrund von Bildern, die mit Kameras aufgenommen und rechnerisch verarbeitet werden, sind aus den Druckschriften DE 40 37 934 A1, DE 44 09 153 A1, DE 295 03 708 U1 und DE 38 17 387 C2 bekannt. Die Druckschrift DE 40 90 293 T1 beschreibt dies für einen ausgedehnten, flächigen Körper.

Weiterhin sind im Stand der Technik Vorrichtungen zum Bestimmen der Durchbiegung eines Verbindungselements bekannt, bei denen das Verbindungselement auf zwei Auflagern aufliegend vor einem Messsensor gedreht wird. Hierfür ist es erforderlich, das jeweilige Verbindungselement vereinzelt in die Vorrichtung einzubringen und um mindestens 180° zu drehen.

Die JP-A-8 159 732 beschreibt eine Vorrichtung zum Bestimmen der Durchbiegung eines elektronischen Bauteils. Dabei wird das elektronische Bauteil von zwei Kameras aufgenommen, die senkrecht zueinander stehen.

In der DE-A-29 45 456 wird die Durchbiegung eines Baumstammes ermittelt. Durch ein Schattenwurfverfahren in zwei senkrecht zueinander stehenden Richtungen werden Stammquerschnitte und deren Mittelpunkte entlang der Länge des Stammes ermittelt. Die Abweichung dieser Mittellinie in der Mitte des Stammes von der durch die Mittelpunkte der Stammendstücke gedachten Linie wird ebenfalls in zwei senkrecht zueinander stehenden Richtungen bestimmt.

**AUFGABE DER ERFINDUNG**

Der Erfindung liegt die Aufgabe zugrunde, ein Verfahren und eine Vorrichtung zum Bestimmen der Durchbiegung eines Verbindungselements bereitzustellen, mit denen eine effektive und kostengünstige Bestimmung der Durchbiegung des Verbindungselements auf seinem Weg in einem Materialfluss möglich ist.

**LÖSUNG**

Die Aufgabe der Erfindung wird erfindungsgemäß mit den Merkmalen der unabhängigen Patentansprüche 1 bzw. 6 gelöst.

**BESCHREIBUNG DER ERFINDUNG**

Die Erfindung betrifft ein Verfahren und eine Vorrichtung zum Bestimmen der Durchbiegung eines Verbindungselements. Unter der Durchbiegung des Verbindungselements ist dabei die Abweichung der Ist-Mittelachse von der Soll-Mittelachse des Verbindungselements zu verstehen. Der Begriff "Durchbiegung" ist in diesem Sinne mindestens so weit auszulegen, dass er z. B. auch Abkrümmungen und fehlenden Rundlauf des Verbindungselements ohne externe Last umfasst. Typische Verbindungselemente sind Schrauben, Bolzen und Niete.

Bei dem Verfahren zum Bestimmen der Durchbiegung eines Verbindungselements in zwei im Wesentlichen senkrecht zueinander angeordneten Ebenen wird ein erstes Bild des Verbindungselements mit einer ersten Kamera aufgenommen. Zwei erste Referenzpunkte des Verbindungselements in dem ersten Bild werden zur Bestimmung einer durch die zwei ersten Referenzpunkte gehenden ersten Referenzachse des Verbindungselements bestimmt. Ein erster Prüfpunkt wird als Mittelpunkt eines ersten Prüfbereichs in dem ersten Bild bestimmt. Die Position des ersten Prüfpunkts wird mit der entsprechenden Position der ersten Referenzachse verglichen, um eine erste Abweichung des Verbindungselements zu bestimmen. Ein zweites Bild des Verbindungselements wird mit einer zweiten Kamera aufgenommen, wobei die optische Achse der zweiten Kamera im Wesentlichen senkrecht zu der optischen Achse der ersten Kamera angeordnet ist. Die optischen Achsen schneiden sich vorteilhafterweise etwa in der Längsachse des Verbindungselements. Zwei zweite Referenzpunkte des Verbindungselements in dem zweiten Bild werden zur Bestimmung einer durch die zwei zweiten Referenzpunkte gehenden zweiten Referenzachse des Verbindungselements bestimmt. Ein zweiter Prüfpunkt wird als Mittelpunkt eines zweiten Prüfbereichs in dem zweiten Bild bestimmt. Die Position des zweiten Prüfpunkts wird mit der entsprechenden Position der zweiten Referenzachse verglichen, um eine zweite Abweichung zu bestimmen.

Die Vorrichtung zum Bestimmen der Durchbiegung eines Verbindungselements in zwei im Wesentlichen senkrecht zueinander angeordneten Ebenen weist eine erste Kamera zum Aufnehmen eines ersten Bilds des Verbindungselements auf. Eine Einrichtung dient zum Bestimmen von zwei ersten Referenzpunkten des Verbindungselements in dem ersten Bild zur Bestimmung einer durch die zwei ersten Referenzpunkte gehenden ersten Referenzachse des Verbindungselements. Die vorgenannte Einrichtung oder eine andere Einrichtung dient zum Bestimmen eines ersten Prüfpunkts als Mittelpunkt eines ersten Prüfbereichs in dem ersten Bild. Die vorgenannte Einrichtung oder eine andere Einrichtung dient zum Vergleichen der Position des ersten Prüfpunkts mit der entsprechenden Position der Referenzachse zur Bestimmung einer ersten Abweichung. Eine zweite Kamera dient zum Aufnehmen eines zweiten Bilds des Verbindungselements, wobei die optische Achse der zweiten Kamera im Wesentlichen senkrecht zu der optischen Achse der ersten Kamera angeordnet ist. Die optischen Achsen schneiden sich etwa in der Längsachse des Verbindungselements. Die vorgenannte Einrichtung oder eine andere Einrichtung dient zum Bestimmen von zwei zweiten Referenzpunkten des Verbindungselements in dem zweiten Bild zur Bestimmung einer durch die zwei zweiten Referenzpunkte gehenden zweiten Referenzachse des Verbindungselements. Die vorgenannte Einrichtung oder eine andere Einrichtung dient zum Bestimmen eines zweiten Prüfpunkts als Mittelpunkt eines zweiten Prüfbereichs in dem zweiten Bild. Die vorgenannte Einrichtung oder eine andere Einrichtung dient zum Vergleichen der Position des zweiten Prüfpunkts mit der entsprechenden Position der zweiten Referenzachse zur Bestimmung einer zweiten Abweichung.

Der Erfindung liegt das Konzept zugrunde, zwei Kameras mit ihren optischen Achsen senkrecht zueinander und senkrecht zur Längsachse des zu vermessenden Verbindungselements anzuordnen. Beide Kameras erfassen dabei vorzugsweise das gesamte Verbindungselement. Hierdurch lässt sich die Durchbiegung bzw. Abkrümmung des Verbindungselements in zwei senkrecht zueinander angeordneten Ebenen bestimmen. Da das Verbindungselement in der Regel nicht so vor den Kameras orientiert liegen wird, dass die tatsächliche Durchbiegung direkt in der Bildebene eines Kamerabilds gemessen werden kann, wird der Satz des Pythagoras angewendet, um die tatsächliche Durchbiegung des Verbindungselements im Raum zu berechnen.

## Bestimmung einer Referenzachse

Zur Bestimmung der Durchbiegung des Verbindungselements werden zunächst zwei Referenzbereiche softwaretechnisch in dem ersten Kamerabild definiert. Die beiden Referenzbereiche geben den Bereich an, in dem das Kamerabild bezüglich der Kontur des abgebildeten Verbindungselements zur Bestimmung der Referenzpunkte ausgewertet wird. Durch eine geeignete Beleuchtung - vorzugsweise Gegenlicht - kann die Kontur des Verbindungselements als dunkler Schatten vor einem hellen Bilduntergrund abgebildet werden. Sie ist in dieser Weise gut auswertbar. In jedem der Referenzbereiche wird mittels mindestens eines geeigneten Verfahrens - vorzugsweise das des Flächenschwerpunkts - ein Referenzpunkt bestimmt. Diese beiden Referenzpunkte werden dann zur Ausbildung einer ersten Referenzachse miteinander verbunden, anhand derer später die Durchbiegung des Verbindungselements bestimmt wird.

Die Referenzbereiche können an den axialen Enden des zu vermessenden Verbindungselements - bei einer Schraube vorzugsweise im Bereich des Schafts - festgelegt werden. Alternativ können die beiden Referenzbereiche jedoch auch an anderen Stellen des Verbindungselements definiert werden.

Das zuvor beschriebene Verfahren zur Bestimmung einer Referenzachse wird auch für das zweite Kamerabild durchgeführt. Es wird also auch hier eine Referenzachse bestimmt.

## Definierung eines Prüfbereichs

Es wird weiterhin ein Prüfbereich in dem ersten Kamerabild definiert. Die maximale Durchbiegung des Verbindungselements wird bei praktischen Anwendungen etwa in der Mitte des Verbindungselements zu finden sein. Wenn die Referenzbereiche an den axialen Enden des zu vermessenden Verbindungselements vorgesehen sind, wird der Prüfbereich etwa in der Mitte des Verbindungselements definiert. Wenn die Referenzbereiche jedoch benachbart in einem definierten Abstand von einem axialen Ende des Verbindungselements festgelegt sind, bietet es sich an, den Prüfbereich an dem anderen axialen Ende des Verbindungselements vorzusehen. Da der Prüfbereich insbesondere softwaretechnisch in dem aufgenommenen Bild definiert wird, ist ein Wechsel von der einen zur anderen Anordnung einfach möglich.

Wie zuvor erwähnt, liegt die maximale Auslenkung eines gekrümmten Bauteils erfahrungsgemäß etwa in der Nähe der axialen Mitte des Bauteils. Um eine gewisse Variationsbreite betreffend die Lage des Bereichs der maximalen Auslenkung bzw. Durchbiegung fehlerfrei erfassen zu können, ist es bevorzugt, den Prüfbereich möglichst groß zu wählen. Nach oben hin findet die Größe des Prüfbereichs jedoch dadurch ihre Grenze, dass bei einem sehr großen Prüfbereich mitunter die Gefahr besteht, dass die maximale Auslenkung nicht genau genug erfasst werden kann.

Um störende, die Genauigkeit verringernde Einflüsse z. B. von Schmutzpartikel zu vermeiden, hat es sich als vorteilhaft erwiesen, die beiden Außenkonturen des Bauteils in dem Prüfbereich zu bestimmen und zunächst den Konturverlauf zu mitteln, bevor der Prüfpunkt bestimmt wird. Es sind jedoch auch andere Algorithmen möglich.

In den Bildern der beiden Kameras wird jeweils mindestens ein Prüfbereich definiert. Es können aber auch mehrere Prüfbereiche definiert und ausgewertet werden.

Das zuvor beschriebene Verfahren zur Definition eines Prüfbereichs wird entsprechend auch für das zweite Kamerabild durchgeführt. Es wird also auch hier mindestens ein Prüfbereich bestimmt.

## Bestimmung eines Prüfpunkts

In der Bildverarbeitung der Kamerabilder sind verschiedene Methoden zur Auswertung der Kontur des Verbindungselements in dem Prüfbereich und zur Bestimmung eines Prüfpunkts oder mehrerer Prüfpunkte realisierbar. Die Bestimmungsverfahren werden derart ausgewählt, dass sie gegenüber unvermeidbaren Störungen vergleichsweise unempfindlich sind. Solche Störungen können z. B. durch an den Verbindungselementen haftende Schmutzpartikel, Deformationen eines Gewindes oder dergleichen hervorgerufen werden. Weiterhin können auch numerische Rundungsfehler vorliegen, die z. B. durch die endliche Auflösung der Kamera bedingt sind. Dies führt insbesondere zu Störungen, wenn das zu prüfende Bauteil nicht senkrecht zum Kamerabild positioniert ist.

Eine erste Methode zur Auswertung der Kontur des Verbindungselements in dem Prüfbereich ist die des Flächenschwerpunkts, bei der der Mittelpunkt der jeweiligen Fläche des Verbindungselements in dem Prüfbereich ermittelt wird. Es hat sich erwiesen, dass dieses Verfahren gegen Störungen besonders unempfindlich ist.

Eine andere Möglichkeit basiert auf der Bestimmung der jeweiligen Außenkante des Übergangs hell/dunkel in dem Kamerabild. Genauer gesagt wird bei diesem Bestimmungsverfahren der Radiusabweichung der Abstand des radial äußersten Punkts des Prüfbereichs an dem ersten radialen Ende des Prüfbereichs zu der Referenzachse bestimmt. Der entsprechende Abstand zu der Referenzachse wird auch für den zweiten radial äußersten Punkt an der gegenüberliegenden radialen Seite des Verbindungselements in dem Prüfbereich ermittelt. Aus der Differenz der beiden Abständen ergibt wird dann die Lage des Prüfpunkts und dessen Abstand zu der Referenzachse. Die Methoden des Flächenschwerpunkts und der Radiusabweichung machen sich jeweils die Eigenschaft zunutze, dass die Biegelinie abgekrümmter Bauteile in der Praxis die stärkste Krümmung jeweils etwa in der Mitte des Bauteils aufweist. An den Enden ist die Krümmung des Bauteils dagegen relativ gering, d. h. die Längsachse des Bauteils verläuft dort näherungsweise linear.

Ein drittes Bestimmungsverfahren ist das der Prüfachse. Hierfür werden zwei Prüfbereiche verwendet. In beiden Prüfbereichen wird jeweils zunächst ein Prüfpunkt als der Flächenschwerpunkt der jeweiligen Fläche bestimmt. Diese beiden Prüfpunkte werden mittels einer Prüfachse miteinander verbunden. Anschließend wird der Abstand der Prüfachse von der Referenzachse ermittelt.

Jeder der Prüfpunkte wird insbesondere durch mindestens zwei Bestimmungsverfahren bestimmt. Vorzugsweise werden drei unterschiedliche Bestimmungsverfahren nacheinander angewendet, daraus jeweils ein vorläufiger Prüfpunkt ermittelt und aus diesen vorläufigen Prüfpunkten dann der endgültige Prüfpunkt - ggf. unter Berücksichtigung von Gewichtungsfaktoren - berechnet. Es hat sich als vorteilhaft erwiesen, zur Bestimmung eines Prüfpunkts sowohl das Bestimmungsverfahren des Flächenschwerpunkts, der Radiusabweichung als auch der Prüfachse zu verwenden.

Es versteht sich, dass dieses Verfahren (bzw. diese Verfahren) - wie zuvor erläutert - für beide Kamerabilder separat durchgeführt wird.

## Bestimmung der tatsächlichen Durchbiegung

Im Anschluss daran wird aus den zwei Werten der zwei Kamerabilder die tatsächliche Durchbiegung bestimmt wird. Hierfür werden die beiden individuell ermittelten Abstände der Prüfpunkte zu der Referenzlinie über den Satz des Pythagoras zu einem Gesamtabstand umgerechnet. Dieser Gesamtabstand wird dann mit einer Sollgröße der Geometrie des Verbindungselements verglichen.

Eine exakte Ausrichtung der Verbindungselemente relativ zu den Kameras ist nicht erforderlich. So ist es möglich, die Verbindungselemente während ihrer linearen Bewegung in einem Materialfluss zu vermessen. Dies ermöglicht hohe Messgeschwindigkeiten und damit einhergehende vergrößerte Durchsätze. Durch eine automatische Auswertung der Messergebnisse und einen Vergleich mit dem Sollwert unter Berücksichtigung einer Toleranz ist die Bildung eines Gut/Schlecht-Signals möglich, mit dem ein entsprechend angesteuerter Auswerfer die Verbindungselemente nach Abschluss der Messung automatisch sortiert.

Um eine gegenseitige Beeinflussung der beiden im Wesentlichen senkrecht zueinander orientierten Kameras durch die Beleuchtungseinrichtung der jeweils anderen Kamera zu vermeiden, können z. B. Polarisationsfilter verwendet werden. Insbesondere bei hellen oder spiegelnden Verbindungselementen wird hierdurch eine Entkopplung der beiden optischen Systeme erreicht. Für jede der beiden Kameras wird dann beleuchtungsseitig vorzugsweise ein gleichartig orientierter Polarisationsfilter verwendet, der nur das Licht der zugeordneten Lichtquelle passieren lässt, während das Licht des anderen optischen Systems ausgesperrt wird.

Bei langen Bauteilen kann es zu Problemen mit der maximalen Auflösung der Kameras kommen. Die Auflösung der Kameras und damit die Messgenauigkeit ist direkt proportional zur Anzahl der Rasterpunkte. Bei einem durch die Länge des Bauteils bedingten großen Bildfeld kann es in der Querrichtung des Bauteils zu verringerten Genauigkeiten kommen. In diesem Fall ist z. B. der Einsatz von optisch in der Längsachse verzerrenden Linsen oder Spiegeln vorteilhaft, die das Bauteil nur in einer Richtung optisch stauchen. Die dabei auf dem Aufnahmechip der Kamera entstehenden Verzerrungen sind insofern akzeptabel, als es nicht darum geht, die Länge des Bauteils, sondern lediglich dessen Auslenkung in Relation zu einer Referenzachse zu bestimmen.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

## KURZBESCHREIBUNG DER FIGUREN

Im Folgenden wird die Erfindung anhand in den Figuren dargestellter bevorzugter Ausführungsbeispiele weiter erläutert und beschrieben.

**Fig. 1** zeigt den prinzipiellen Aufbau einer neuen Vorrichtung zum Bestimmen der Durchbiegung eines Verbindungselements.

**Fig. 2** zeigt die Bestimmung einer Referenzachse über das Bestimmungsverfahren des Flächenschwerpunkts.

**Fig. 3** zeigt die Bestimmung der Abweichung des Verbindungselements mittels des Bestimmungsverfahrens des Flächenschwerpunkts in einem Bild der ersten Kamera.

**Fig. 4** zeigt die Bestimmung der Abweichung des Verbindungselements mittels des Bestimmungsverfahrens des Flächenschwerpunkts in einem Bild der zweiten Kamera.

**Fig. 5** zeigt die Bestimmung der Abweichung eines anderen Verbindungselements mittels des Bestimmungsverfahrens des Flächenschwerpunkts.

**Fig. 6** zeigt die Bestimmung der Abweichung des Verbindungselements mittels des Bestimmungsverfahrens der Radiusabweichung.

**Fig. 7** zeigt die Bestimmung der Abweichung des Verbindungselements mittels des Bestimmungsverfahrens der Prüfachse.

**Fig. 8** zeigt den prinzipiellen Aufbau einer weiteren Ausführungsform der neuen Vorrichtung zum Bestimmen der Durchbiegung eines Verbindungselements unter Verwendung eines Spiegels.

## FIGURENBESCHREIBUNG

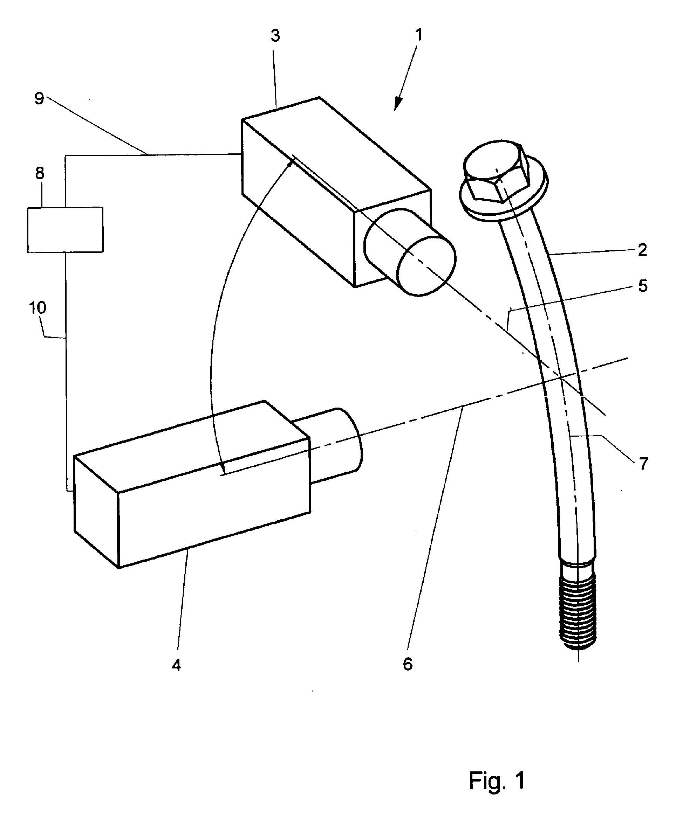

**Fig. 1** zeigt den prinzipiellen Aufbau einer Vorrichtung 1 zum Bestimmen der Durchbiegung eines Verbindungselements 2. Die Vorrichtung 1 ist lediglich schematisch dargestellt. Die genaue schaltungstechnische Realisierung zur Übermittlung und Auswertung der optischen Signale ist dem Fachmann geläufig und wird daher im Folgenden nicht näher beschrieben.

Die Vorrichtung 1 weist eine erste Kamera 3 zum Aufnehmen eines ersten Bilds des Verbindungselements 2 auf. Weiterhin ist eine zweite Kamera 4 zum Aufnehmen eines zweiten Bilds des Verbindungselements 2 vorgesehen. Die Kamera 3 besitzt eine optische Achse 5 und die Kamera 4 eine optische Achse 6. Die optische Achse 6 der zweiten Kamera 4 ist im Wesentlichen senkrecht zu der optischen Achse 5 der ersten Kamera 3 angeordnet. Die optischen Achsen 5, 6 der Kameras 3, 4 schneiden sich etwa in der Längsachse 7 des Verbindungselements 2. Die Vorrichtung 1 weist ferner eine Einrichtung 8 auf. Die Einrichtung 8 dient zur Auswertung der Signale der Kameras 3, 4, wie dies in Bezug auf die folgenden Figuren genauer beschrieben werden wird. Die Einrichtung 8 ist vorzugsweise als PC oder andere elektronische Steuerung mit einer Auswertungssoftware ausgebildet. Es versteht sich, dass anstelle einer Einrichtung 8 auch mehrere getrennte oder miteinander kombinierte Einrichtungen 8 zur Auswertung der Signale der Kameras 3, 4 vorgesehen sein können. Fig. 1 zeigt lediglich schematisch die Verbindung der Einrichtung 8 mit den Kameras 3, 4 über Leitungen 9, 10.

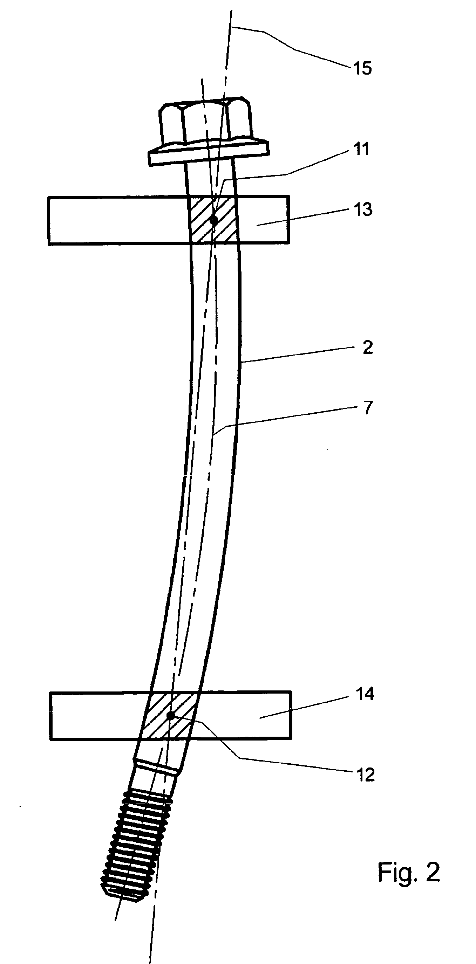

Bezug nehmend auf **Fig. 2** wird im Folgenden ein Verfahren zum Bestimmen der Durchbiegung des Verbindungselements 2 genauer beschrieben. Mittels der Einrichtung 8 werden zunächst zwei Referenzpunkte 11, 12 des Verbindungselements 2 in dem Kamerabild der Kamera 4 bestimmt. Die Referenzpunkte 11, 12 werden jeweils in einem Referenzbereich 13 und 14 des Kamerabilds bestimmt. Die Referenzbereiche 13, 14 werden in der Software der Einrichtung 8 definiert. Im vorliegenden Ausführungsbeispiel sind die Referenzbereiche 13, 14 im Bereich der axialen Enden des Verbindungselements 2 vorgesehen. Es ist jedoch ebenfalls möglich, diese Referenzbereiche 13, 14 an anderen Stellen des Verbindungselements 2 vorzusehen und dort das Kamerabild auszuwerten. Im gezeigten Beispiel wird der jeweilige Referenzpunkt 11, 12 als Schwerpunkt bzw. Mittelpunkt der Fläche des Verbindungselements 2 in dem zugehörigen Referenzbereich 13, 14 anhand des Bestimmungsverfahrens des Flächenschwerpunkts bestimmt. Es können aber auch andere Bestimmungsverfahren verwendet werden, wie dies zuvor beschrieben wurde. In einem nächsten Schritt wird eine Referenzachse 15 gebildet, die sich durch die Referenzpunkte 11, 12 erstreckt. Diese Referenzachse 15 entspricht dem idealen Verlauf des Verbindungselements 2, d. h. für das gezeigte Beispiel einer Schraube ohne Durchbiegung. Wie Fig. 2 in übertriebener Darstellung erkennen lässt, weicht im vorliegenden Fall die Längsachse 7 des Verbindungselements 2 von der Referenzachse 15 ab.

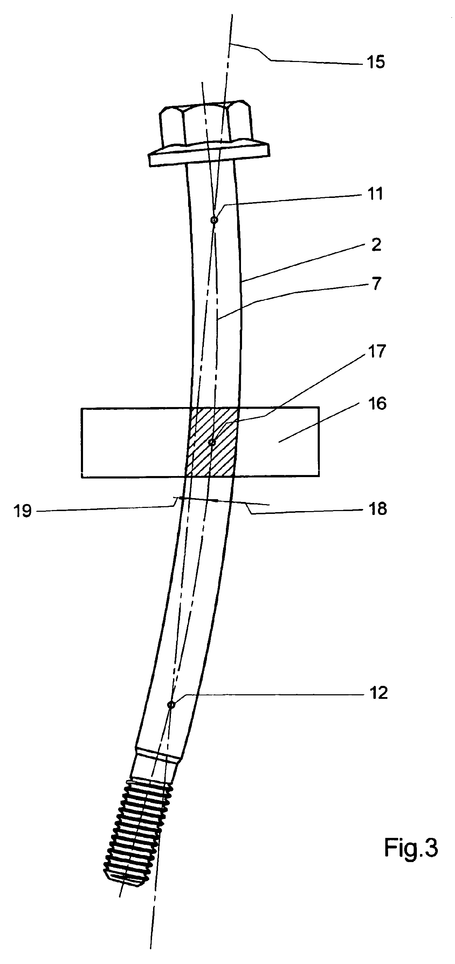

Ein erstes Verfahren zum Bestimmen der Abweichung der Längsachse 7 des Verbindungselements 2 von der Referenzachse 15 wird im Folgenden anhand der **Fig. 3** beschrieben. Dieses Verfahren wird für das Bild der ersten Kamera (in diesem Fall Kamera 4) durchgeführt. Zusätzlich zu den Referenzpunkten 11, 12 und der Referenzachse 15 ist in Fig. 3 ein Prüfbereich 16 erkennbar. In diesem Prüfbereich 16 wird mittels des Bestimmungsverfahrens des Flächenschwerpunkts der Schwerpunkt bzw. Mittelpunkt der Fläche des Verbindungselements 2 in dem Prüfbereich 16 bestimmt. Dieser Punkt wird als Prüfpunkt 17 bezeichnet. Die Position des Prüfpunkts 17 wird dann mit der entsprechenden Position der Referenzachse 15 zur Bestimmung der Abweichung der des Verbindungselements 2 in der Ebene des aufgenommenen Bilds bestimmt. Die Abweichung ist in Fig. 3 anhand der Pfeile 18, 19 erkennbar.

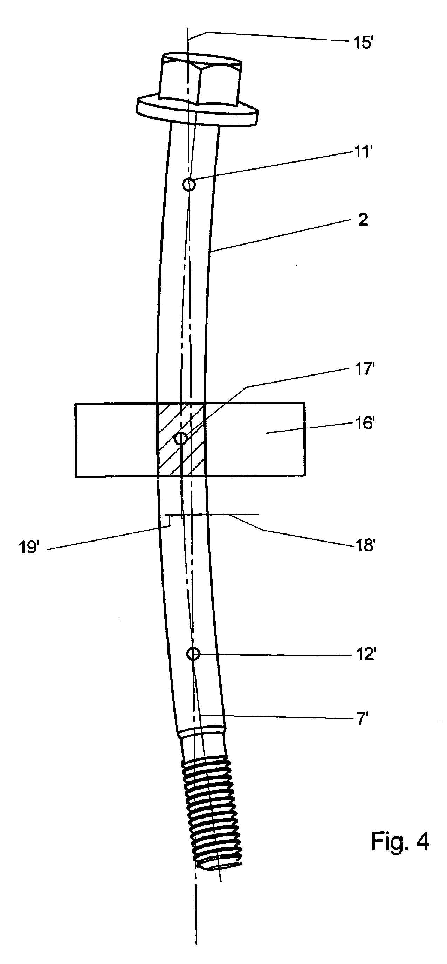

Das zuvor beschriebene Verfahren wird für mindestens zwei Bilder durchgeführt, d. h. nicht nur für das erste Bild der ersten Kamera, sondern auch für das zweite Bild der zweiten Kamera (in diesem Fall 3), wie dies in **Fig. 4** dargestellt ist. Mittels der Einrichtung 8 werden wiederum zwei Referenzpunkte 11', 12' des Verbindungselements 2 in dem Kamerabild der Kamera 3 bestimmt. Die Referenzpunkte 11', 12' werden jeweils in einem Referenzbereich 13' und 14' (hier nicht dargestellt, vgl. aber entsprechend Fig. 2) des Kamerabilds bestimmt. Die Referenzbereiche 13', 14' werden in der Software der Einrichtung 8 definiert. Im vorliegenden Ausführungsbeispiel sind die Referenzbereiche 13', 14' im Bereich der axialen Enden des Verbindungselements 2 vorgesehen. Es ist jedoch ebenfalls möglich, diese Referenzbereiche 13', 14' an anderen Stellen des Verbindungselements 2 vorzusehen und dort das Kamerabild auszuwerten. Im gezeigten Beispiel wird der jeweilige Referenzpunkt 11', 12' als Schwerpunkt bzw. Mittelpunkt der Fläche des Verbindungselements 2 in dem zugehörigen Referenzbereich 13', 14' anhand des Bestimmungsverfahrens des Flächenschwerpunkts bestimmt. Es können aber auch andere Bestimmungsverfahren verwendet werden, wie dies zuvor beschrieben wurde. In einem nächsten Schritt wird eine Referenzachse 15' gebildet, die sich durch die Referenzpunkte 11', 12' erstreckt. Diese Referenzachse 15' entspricht dem idealen Verlauf des Verbindungselements 2, d. h. für das gezeigte Beispiel einer Schraube ohne Durchbiegung. Wie Fig. 4 in übertriebener Darstellung erkennen lässt, weicht im vorliegenden Fall die Längsachse 7' des Verbindungselements 2 von der Referenzachse 15' ab. Zusätzlich zu den Referenzpunkten 11', 12' und der Referenzachse 15' ist in Fig. 4 ein Prüfbereich 16' erkennbar. In diesem Prüfbereich 16' wird mittels des Bestimmungsverfahrens des Flächenschwerpunkts der Schwerpunkt bzw. Mittelpunkt der Fläche des Verbindungselements 2 in dem Prüfbereich 16' bestimmt. Dieser Punkt wird als Prüfpunkt 17' bezeichnet. Die Position des Prüfpunkts 17' wird dann mit der entsprechenden Position der Referenzachse 15' zur Bestimmung der Abweichung des Verbindungselements 2 in der Ebene dieses aufgenommenen Bilds bestimmt. Die Abweichung ist in Fig. 4 anhand der Pfeile 18', 19' erkennbar.

Aufgrund der senkrechten Anordnung der Kameras 3, 4 relativ zueinander (Fig. 1) kann dann basierend auf den zwei ermittelten Abweichungen (Fig. 3 und 4) die tatsächliche Durchbiegung des Verbindungselements 2 mittels des Satzes des Pythagoras bestimmt werden. Basierend auf dem Satz des Pythagoras gemäß der Formel $a^2 + b^2 = c^2$ berechnet sich die tatsächliche Durchbiegung c bekanntlich wie folgt:

$$c = \sqrt{a^2 + b^2}$$

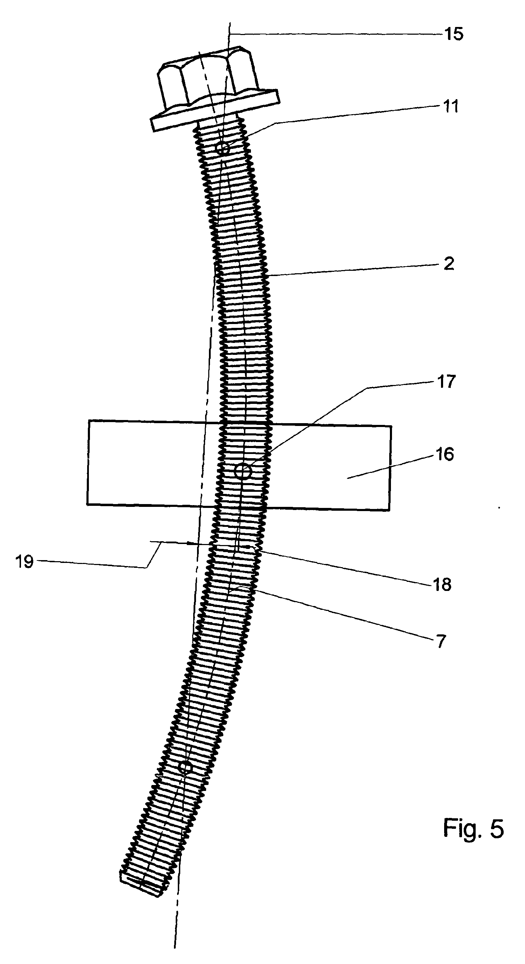

**Fig. 5** zeigt ebenfalls das Bestimmungsverfahren des Flächenschwerpunkts zum Bestimmen der Abweichung des Prüfpunkts 17 von der Position des entsprechenden Punkts auf der Referenzachse 15. Im Unterschied zu Fig. 3 ist das Verbindungselement 2 hier als Schraube mit einem Gewinde ausgebildet, welches sich nahezu über den gesamten Schaft der Schraube erstreckt. Es versteht sich, dass auch andere Anordnungen von Gewindeabschnitten, Schaftabschnitten, Passabschnitten oder dergleichen an dem Verbindungselement 2 möglich sind. Auch andere Arten von Verbindungselementen 2 oder sonstige können mittels des erfindungsgemäßen Verfahrens vermessen werden.

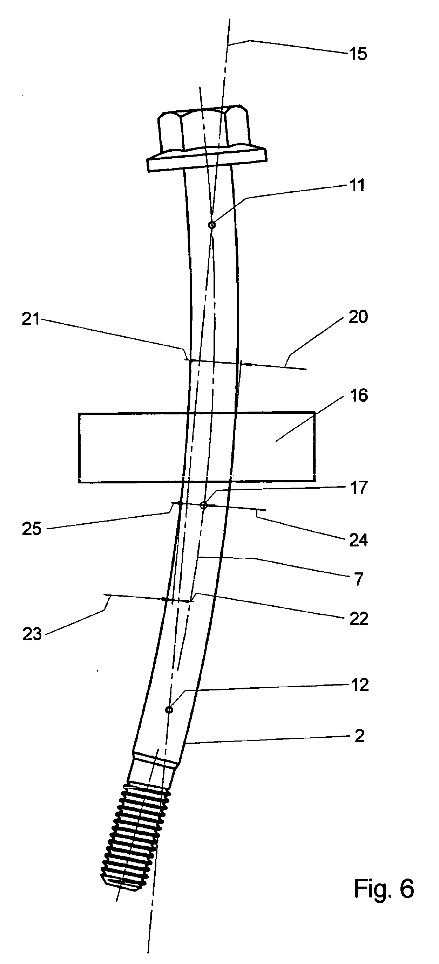

**Fig. 6** zeigt ein weiteres Bestimmungsverfahren. In diesem Fall handelt es sich um das der Radiusabweichung. Bei diesem Verfahren wird der Abstand eines ersten radial außen liegenden Punkts des Prüfbereichs 16 zu der Referenzachse 15 bestimmt. Diese Messung wird für den zweiten radial außen liegenden Punkt an der gegenüberliegenden radialen Seite des Verbindungselements 2 in dem Prüfbereich 16 wiederholt. Dies ist mittels der Pfeile 20, 21 und 22, 23 verdeutlicht. Aus der Differenz der beiden Abständen ergibt sich dann die Lage des Prüfpunkt 17, dessen Abstand von der Referenzachse 15 anhand der Pfeile 24, 25 erkennbar ist.

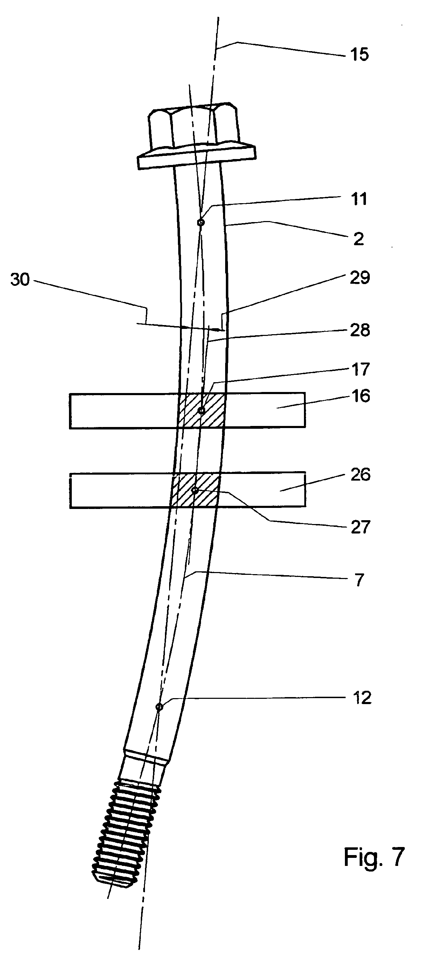

Ein weiteres Bestimmungsverfahren ist in **Fig. 7** gezeigt. Bei diesem Bestimmungsverfahren handelt es sich um das der Prüfachse. Hierfür wird neben dem ersten Prüfbereich 16 noch ein zweiter Prüfbereich 26 definiert. In den Prüfbereichen 16 bzw. 26 wird der Prüfpunkt 17 bzw. 27 als der Flächenschwerpunkt der Fläche des Verbindungselements 2 in dem Prüfbereich 16 bzw. 26 bestimmt. Die beiden Prüfpunkte 17, 27 werden mittels einer Prüfachse 28 miteinander verbunden. Anschließend wird der Abstand der Prüfachse 28 von der Referenzachse 15 ermittelt, was anhand der Pfeile 29, 30 gezeigt ist.

Die in Bezug auf die Figuren 3 bis 7 zuvor beschriebenen Bestimmungsverfahren können alternativ oder auch kumulativ angewendet werden. Vorzugsweise werden mindestens zwei unterschiedliche Bestimmungsverfahren nacheinander angewendet, daraus jeweils ein vorläufiger Prüfpunkt 17 bzw. 17' ermittelt und aus diesen vorläufigen Prüfpunkten 17, 17' dann der endgültige Prüfpunkt - ggf. unter Berücksichtigung von Gewichtungsfaktoren - berechnet. Es hat sich als vorteilhaft erwiesen, zur Bestimmung eines Prüfpunkts 17, 17' sowohl das Bestimmungsverfahren des Flächenschwerpunkts, der Radiusabweichung als auch der Prüfachse zu verwenden.

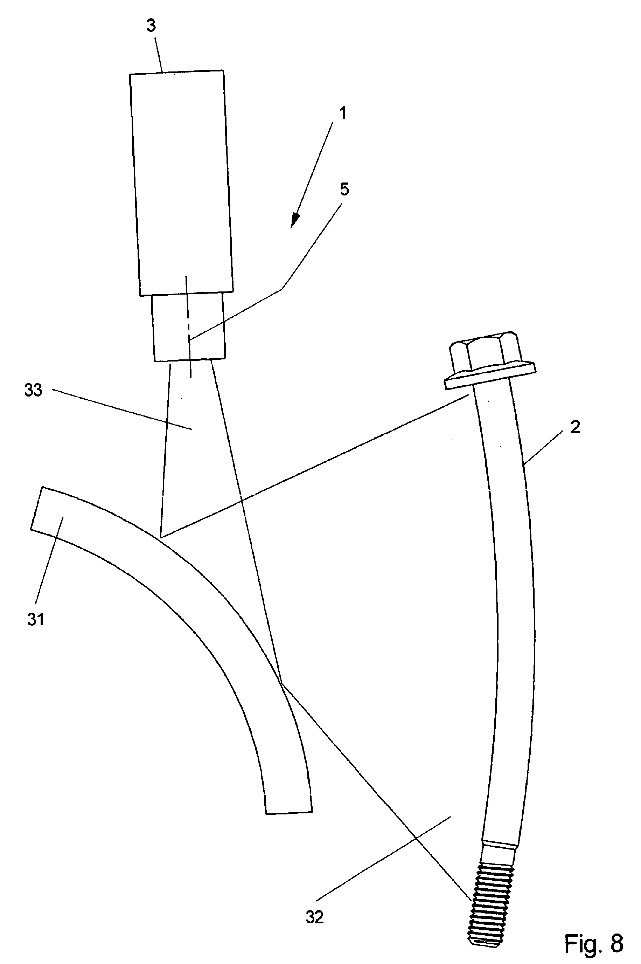

**Fig. 8** zeigt den prinzipiellen Aufbau einer weiteren Ausführungsform der neuen Vorrichtung 1 zum Bestimmen der Durchbiegung eines Verbindungselements 2. Im vorliegenden Fall ist die Anordnung der Kameras 3, 4 anders gewählt. Aus Gründen der Übersichtlichkeit ist lediglich die Kamera 3 dargestellt. Es versteht sich, dass die Kamera 4 jedoch ebenfalls vorhanden ist, und zwar wiederum so, dass deren optische Achse 6 annähernd senkrecht zu der optischen Achse 5 der Kamera 3 verläuft. Als verzerrende Optik wir hier ein gekrümmter

Spiegel 31 verwendet. Bei einem langen Verbindungselement 2 kann es zu Problemen mit der maximalen Auflösung der Kamera 3 bzw. 4 kommen. Die Auflösung der Kamera 3 bzw. 4 und damit die Messgenauigkeit ist direkt proportional zur Anzahl der Rasterpunkte. Bei einem durch die Länge des Verbindungselements 2 bedingten großen Bildfeld 32 kann es in der Querrichtung des Verbindungselements 2 zu verringerten Genauigkeiten kommen. In diesem Fall ist der Einsatz des Spiegels 31 vorteilhaft, da er das Verbindungselement 2 nur in einer Richtung zur Erzielung des im Vergleich zum Bildfeld 32 verkleinerten Abbildungsfeld 33 optisch staucht. Die dabei auf dem Aufnahmechip der Kamera 3 bzw. 4 entstehenden Verzerrungen sind insofern akzeptabel, als es nicht darum geht, die Länge des Verbindungselements 2, sondern lediglich dessen Auslenkung in Relation zu einer Referenzachse zu bestimmen.

## BEZUGSZEICHENLISTE

| | |
|---|---|
| 1 | Vorrichtung |
| 2 | Verbindungselement |
| 3 | Kamera |
| 4 | Kamera |
| 5 | optische Achse |
| 6 | optische Achse |
| 7 | Längsachse |
| 8 | Einrichtung |
| 9 | Leitung |
| 10 | Leitung |
| | |
| 21 | Pfeil |
| 22 | Pfeil |
| 23 | Pfeil |
| 24 | Pfeil |
| 25 | Pfeil |
| 26 | Prüfbereich |
| 27 | Prüfpunkt |
| 28 | Prüfachse |
| 29 | Pfeil |
| 30 | Pfeil |
| | |
| 11 | Referenzpunkt |
| 12 | Referenzpunkt |
| 13 | Referenzbereich |
| 14 | Referenzbereich |
| 15 | Referenzachse |
| 16 | Prüfbereich |
| 17 | Prüfpunkt |
| 18 | Pfeil |
| 19 | Pfeil |
| 20 | Pfeil |
| | |
| 31 | Spiegel |
| 32 | Bildfeld |
| 33 | Abbildungsfeld |

**Patentansprüche**

1. Verfahren zum Bestimmen der Durchbiegung eines Verbindungselements in zwei im Wesentlichen senkrecht zueinander angeordneten Ebenen, mit den Schritten:

   Aufnehmen eines ersten Bilds des Verbindungselements (2) mit einer ersten Kamera (3); Bestimmen von zwei Referenzpunkten (11, 12) des Verbindungselements (2) in dem ersten Bild zur Bestimmung einer durch die zwei ersten Referenzpunkte (11, 12) gehenden ersten Referenzachse (15) des Verbindungselements (2); Bestimmen eines ersten Prüfpunkts (17) in einem ersten Prüfbereich (16) in dem ersten Bild; Vergleichen der Position des ersten Prüfpunkts (17) mit der entsprechenden Position der ersten Referenzachse (15) zur Bestimmung einer ersten Abweichung; Aufnehmen eines zweiten Bilds des Verbindungselements (2) mit einer zweiten Kamera (4), wobei die optische Achse (6) der zweiten Kamera (4) im Wesentlichen senkrecht zu der optischen Achse (5) der ersten Kamera (3) angeordnet ist und sich die optischen Achsen (5, 6) etwa in der Längsachse (7) des Verbindungselements (2) schneiden; Bestimmen von zwei Referenzpunkten (11', 12') des Verbindungselements (2) in dem zweiten Bild zur Bestimmung einer durch die zwei zweiten Referenzpunkte (11', 12') gehenden zweiten Referenzachse (15') des Verbindungselements (2); Bestimmen eines zweiten Prüfpunkts (17') in einem zweiten Prüfbereich (16') in dem zweiten Bild; und Vergleichen der Position des zweiten Prüfpunkts (17') mit der entsprechenden Position der zweiten Referenzachse (15') zur Bestimmung einer zweiten Abweichung.

2. Verfahren nach Anspruch 1, bei dem die tatsächliche Durchbiegung des Verbindungselements (2) aus der ersten und zweiten Abweichung mittels des Satzes des Pythagoras bestimmt wird.

3. Verfahren nach Anspruch 1 oder 2, bei dem der erste und zweite Prüfpunkt (17, 17') jeweils durch mindestens zwei die Kontur des Verbindungselements (2) in dem jeweiligen Prüfbereich (16, 16') auswertende Bestimmungsverfahren bestimmt wird.

4. Verfahren nach Anspruch 3, wobei es sich bei einem der Bestimmungsverfahren um das des Flächenschwerpunkts handelt.

5. Verfahren nach Anspruch 3, bei dem drei Bestimmungsverfahren verwendet werden, bei denen es sich um die des Flächenschwerpunkts, der Radiusabweichung und der Prüfachse handelt.

6. Vorrichtung zum Bestimmen der Durchbiegung eines Verbindungselements in zwei im Wesentlichen senkrecht zueinander angeordneten Ebenen, mit:

   einer ersten Kamera (3) zum Aufnehmen eines ersten Bilds des Verbindungselements (2); einer Einrichtung (8) zum Bestimmen von zwei ersten Referenzpunkten (11, 12) des Verbindungselements (2) in dem ersten Bild zur Bestimmung einer durch die zwei Referenzpunkte (11, 12) gehenden ersten Referenzachse (15) des Verbindungselements (2); einer Einrichtung zum Bestimmen eines ersten Prüfpunkts (17) in einem ersten Prüfbereich (16) in dem ersten Bild; einer Einrichtung (8) zum Vergleichen der Position des ersten Prüfpunkts (17) mit der entsprechenden Position der ersten Referenzachse (15) zur Bestimmung einer ersten Abweichung; einer zweiten Kamera (4) zum Aufnehmen eines zweiten Bilds des Verbindungselements (2), wobei die optische Achse (6) der zweiten Kamera (4) im Wesentlichen senkrecht zu der optischen Achse (5) der ersten Kamera (3) angeordnet ist und sich die optischen Achsen (5, 6) etwa in der Längsachse (7) des Verbindungselements (2) schneiden; einer Einrichtung (8) zum Bestimmen von zwei zweiten Referenzpunkten (11', 12') des Verbindungselements (2) in dem zweiten Bild zur Bestimmung einer durch die zwei zweiten Referenzpunkte (11', 12') gehenden zweiten Referenzachse (15') des Verbindungselements (2); einer Einrichtung (8) zum Bestimmen eines zweiten Prüfpunkts (17') in einem zweiten Prüfbereich (16') in dem zweiten Bild; und einer Einrichtung (8) zum Vergleichen der Position des zweiten Prüfpunkts (17') mit der entsprechenden Position der zweiten Referenzachse (15') zur Bestimmung einer zweiten Abweichung.

7. Vorrichtung nach Anspruch 6, wobei die Einrichtung (8) zur Bestimmung der tatsächlichen Durchbiegung des Verbindungselements (2) aus der ersten und zweiten Abweichung mittels des Satzes des Pythagoras ausgebildet ist.

8. Vorrichtung nach Anspruch 6 oder 7, wobei die Einrichtung (8) zur Bestimmung des ersten und zweiten Prüfpunkts (17, 17') jeweils durch mindestens zwei die Kontur des Verbindungselements (2) in dem jeweiligen Prüfbereich (16, 16') auswertende Bestimmungsverfahren ausgebildet ist.

**9.** Vorrichtung nach Anspruch 8, wobei es sich bei einem der Bestimmungsverfahren um das des Flächenschwerpunkts handelt.

**10.** Vorrichtung nach Anspruch 6, wobei die Einrichtung (8) zur Verwendung von drei Bestimmungsverfahren ausgebildet ist, bei denen es sich um die des Flächenschwerpunkts, der Radiusabweichung und der Prüfachse handelt.

**Claims**

**1.** A method for determining the deflection of a fastener in two substantially perpendicular planes, comprising the steps of:

recording a first image of the fastener (2) with a first camera (3);
determining two reference points (11, 12) of the fastener (2) in the first image for determining a first reference axis (15) of the fastener (2), the first reference axis (15) extending through the two first reference points (11, 12);
determining a first inspection point (17) in a first inspection region (16) in the first image;
comparing the position of the first inspection point (17) with the respective position of the first reference axis (15) for determining a first deviation;
recording a second image of the fastener (2) with a second camera (4), the optical axis (6) of the second camera (4) being substantially perpendicular to the optical axis (5) of the first camera (3), the optical axes (5, 6) of the first and second camera approximately intersecting in the longitudinal axis of the fastener;
determining two reference points (11', 12') of the fastener (2) in the second image for determining a second reference axis (15') of the fastener (2), the second reference axis (15') extending through the two second reference points (11', 12');
determining a second reference point (17') in a second inspection region (16') in the second image; and
comparing the position of the second inspection point (17') with the respective position of the second reference axis (15') for determining a second deviation.

**2.** The method of claim 1, wherein the actual deflection of the fastener (2) is determined from the first and second deviation by the Pythagorean Theorem.

**3.** The method of claim 1 or 2, wherein the first and second inspection point (17, 17') are each determined by at least two determination methods, the determination methods analysing the contour of the fastener (2) in the respective inspection region (16, 16').

**4.** The method of claim 3, wherein one of the determination methods is the one of the centre of the area.

**5.** The method of claim 3, wherein three determination methods are used, the determination methods being the ones of the centre of the area, of the radius deviation and of the inspection axis.

**6.** An apparatus for determining the deflection of a fastener in at least two substantially perpendicular planes, comprising:

a first camera (3) for recording a first image of the fastener (2);
a unit (8) for determining two first reference points (11, 12) of the fastener (2) in the first image for determining a first reference axis (15) of the fastener (2), the first reference axis (15) extending through the two first reference points (11, 12);
a unit (8) for determining a first inspection point (17) in a first inspection region (16) in the first image;
a unit (8) for comparing the position of the first inspection point (17) with the respective position of the first reference axis (15) for determining a first deviation;
a second camera (4) for recording a second image of the fastener (2), the optical axis (6) of the second camera (4) being arranged substantially perpendicular to the optical axis (5) of the first camera (3), the optical axes (5, 6) approximately intersecting in the longitudinal axis of the fastener (2);
a unit (8) for determining two second reference points (11', 12') of the fastener (2) in the second image for determining a second reference axis (15') of the fastener (2), the second reference axis (15') extending through the two second reference points (11', 12');
a unit (8) for determining a second reference point (17') in a second inspection region (16') in the second image; and
a unit (8) for comparing the position of the second inspection point (17') with the respective position of the second reference axis (15') for determining a second deviation.

**7.** The apparatus of claim 6, wherein the unit (8) is designed for determining the actual deflection of the fastener (2) from the first and second deviation based on the Pythagorean Theorem.

**8.** The apparatus of claim 6 or 7, wherein the unit (8) is designed for determining each of the first and second inspection point (17, 17') by at least two determination methods, the determination methods analysing the contour of the fastener (2) in the respective inspection region (16, 16').

9. The apparatus of claim 8, wherein one of the determination methods is the one of the centre of the area.

10. The apparatus of claim 6, wherein the unit (8) is designed for using three different determination methods, the determination methods being the ones of the centre of the area, of the radius deviation and of the inspection axis.

**Revendications**

1. Procédé de détermination de la flèche d'un élément de liaison sur deux plans sensiblement perpendiculaires l'un à l'autre, comprenant les étapes suivantes :

saisie d'une première image de l'élément de liaison (2) par une première caméra (3) ; détermination de deux points de référence (11, 12) de l'élément de liaison (2) dans la première image pour la définition d'un premier axe de référence (15) de l'élément de liaison (2), passant par les deux premiers points de référence (11, 12) ; détermination d'un premier point de contrôle (17) dans une première zone de contrôle (16) de la première image ; comparaison de la position du premier point de contrôle (17) avec la position correspondante du premier axe de référence (15) pour la détermination d'un premier écart ; saisie d'une deuxième image de l'élément de liaison (2) par une deuxième caméra (4), l'axe optique (6) de la deuxième caméra (4) étant sensiblement perpendiculaire à l'axe optique (5) de la première caméra (3), et les axes optiques (5, 6) se coupant sensiblement sur l'axe longitudinal (7) de l'élément de liaison (2) ; détermination de deux points de référence (11', 12') de l'élément de liaison (2) dans la deuxième image pour la définition d'un deuxième axe de référence (15') de l'élément de liaison (2), passant par les deux seconds points de référence (11', 12') ; détermination d'un deuxième point de contrôle (17') dans une deuxième zone de contrôle (16') de la deuxième image ; et comparaison de la position du deuxième point de contrôle (17') avec la position correspondante du deuxième axe de référence (15') pour la détermination d'un deuxième écart.

2. Procédé selon la revendication 1, où la flèche effective de l'élément de liaison (2) est déterminée à partir du premier et du deuxième écart au moyen du théorème de Pythagore.

3. Procédé selon la revendication 1 ou la revendication 2, où le premier et le deuxième points de contrôle (17, 17') sont respectivement déterminés par au moins deux procédés de détermination du contour de l'élément de liaison (2) dans la zone de contrôle (16, 16') correspondante.

4. Procédé selon la revendication 3, où l'un des procédés de détermination porte sur le centre de gravité de surface.

5. Procédé selon la revendication 3, où trois procédés de détermination sont appliqués, portant sur le centre de gravité de surface, l'écart de rayon et l'axe de contrôle.

6. Dispositif pour la détermination de la flèche d'un élément de liaison sur deux plans sensiblement perpendiculaires l'un à l'autre, comprenant :

une première caméra (3) pour la saisie d'une première image de l'élément de liaison (2) ; un dispositif (8) pour la détermination de deux premiers points de référence (11, 12) de l'élément de liaison (2) dans la première image pour la définition d'un premier axe de référence (15) de l'élément de liaison (2), passant par les deux premiers points de référence (11, 12) ; un dispositif pour la détermination d'un premier point de contrôle (17) dans une première zone de contrôle (16) de la première image ; un dispositif (8) pour la comparaison de la position du premier point de contrôle (17) avec la position correspondante du premier axe de référence (15) pour la détermination d'un premier écart ; une deuxième caméra (4) pour la saisie d'une deuxième image de l'élément de liaison (2), l'axe optique (6) de la deuxième caméra (4) étant sensiblement perpendiculaire à l'axe optique (5) de la première caméra (3), et les axes optiques (5, 6) se coupant sensiblement sur l'axe longitudinal (7) de l'élément de liaison (2) ; un dispositif (8) pour la détermination de deux seconds points de référence (11', 12') de l'élément de liaison (2) dans la deuxième image pour la définition d'un deuxième axe de référence (15') de l'élément de liaison (2), passant par les deux seconds points de référence (11', 12') ; un dispositif (8) pour la détermination d'un deuxième point de contrôle (17') dans une deuxième zone de contrôle (16') de la deuxième image ; et

un dispositif (8) pour la comparaison de la position du deuxième point de contrôle (17') avec la position correspondante du deuxième axe de référence (15') pour la détermination d'un deuxième écart.

7. Dispositif selon la revendication 6, où le dispositif (8) pour la détermination de la flèche effective de l'élément de liaison (2) à partir du premier et du deuxième écart est réalisé au moyen du théorème de Pythagore.

8. Dispositif selon la revendication 6 ou la revendication 7, où le dispositif (8) pour la détermination respective du premier et du deuxième points de contrôle (17, 17') est réalisé par au moins deux procédés de détermination du contour de l'élément de liaison (2) dans la zone de contrôle (16, 16') correspondante.

9. Dispositif selon la revendication 8, où l'un des procédés de détermination porte sur le centre de gravité de surface.

10. Dispositif selon la revendication 6, où le dispositif (8) est réalisé pour l'application de trois procédés de détermination, portant sur le centre de gravité de surface, l'écart de rayon et l'axe de contrôle.

Fig. 1

15

11

13

2

7

14

12

Fig. 2

Fig.3

Fig. 4

Fig. 5

Fig. 6

15

11

2

30

29

28

17

16

26

27

7

12

Fig. 7

Fig. 8